# EUROPÄISCHE PATENTANMELDUNG

(11) **EP 4 375 132 A1**
(43) Veröffentlichungstag der Anmeldung: **29.05.2024**
(21) Anmeldenummer: 23196339.8
(22) Anmeldetag: 08.09.2023
(51) Int. Cl.: B60N 2/06, B60N 2/22, B64D 11/06, B60N 2/24, B60N 2/70

(54) **FAHRZEUGSITZ**

(30) Priorität: 25.11.2022 DE 102022131303
(71) Anmelder: GRAMMER AG, 92289 Ursensollen (DE)
(72) Erfinder: LINGL, Sebastian, 92256 Hahnbach (DE); NIEBAUER, Michael, 92526 Oberviechtach (DE); ÜBELACKER, Roland, 92536 Pfreimd (DE)
(74) Vertreter: Hannke Bittner & Partner mbB Regensburg

(57) **Zusammenfassung**

Die Erfindung betrifft einen Fahrzeugsitz umfassend einen Grundrahmen, welcher einen Sitzteilrahmen und einen Rückenlehnenrahmen umfasst, und ein gegenüber dem Grundrahmen verlagerbares Sitzteil. Der Fahrzeugsitz umfasst ein Rückenlehnenteil, wobei das Rückenlehnenteil dazu vorgesehen und ausgebildet ist, mit dem Rückenlehnenrahmen und dem Sitzteil lösbar verbindbar zu sein.

## Beschreibung

Die Erfindung betrifft einen Fahrzeugsitz umfassend einen Grundrahmen, welcher einen Sitzteilrahmen und einen Rückenlehnenrahmen umfasst, und ein gegenüber dem Grundrahmen verlagerbares Sitzteil.

Aus dem Stand der Technik sind derartige Fahrzeugsitze hinlänglich bekannt, welche mittels einer derart ausgebildet sind.

Diese Fahrzeugsitze können ein Rückenlehnenpolster aufweisen, welches mit dem Rückenlehnenrahmen verbunden und gegebenenfalls einstellbar ist, je nach den Bedürfnissen der jeweiligen Person.

Jedoch sind diese Rückenlehnenpolster meist aufwendig auszutauschen oder gar nicht austauschbar, so dass der gesamte Fahrzeugsitz ausgetauscht werden muss. Gerade im Bereich der Personenbeförderung ist dies oft nicht gewünscht, da durch die beengten Platzverhältnisse ein Austausch eines kompletten Sitzes äußerst aufwändig ist.

Ebenso sind diese Fahrzeugsitze nur schwierig zusammenzubauen und gegebenenfalls nur äußerst aufwendig zu reparieren.

Es ist demnach die Aufgabe der vorliegenden Erfindung, die Nachteile des Standes der Technik zu überwinden. Es wird ein Fahrzeugsitz vorgeschlagen, welcher besonders einfach konstruiert ist, so dass das Rückenlehnenpolster leicht austauschbar ist.

Diese Aufgabe wird gelöst durch einen Fahrzeugsitz mit den Merkmalen des Patentanspruches 1.

Ein Kerngedanke der Erfindung ist es, einen Fahrzeugsitz bereitzustellen, umfassend einen Grundrahmen, welcher einen Sitzteilrahmen und einen Rückenlehnenrahmen umfasst, und ein gegenüber dem Grundrahmen verlagerbares Sitzteil. Es ist vorgesehen, dass der Fahrzeugsitz ein Rückenlehnenteil umfasst, wobei das Rückenlehnenteil dazu vorgesehen und ausgebildet ist, mit dem Rückenlehnenrahmen und dem Sitzteil lösbar verbindbar zu sein.

Erfindungsgemäß ist es demnach vorgesehen, dass das Rückenlehnenteil von dem Grundrahmen des Fahrzeugsitzes gelöst und daran montiert werden kann. Dadurch ist es möglich, lediglich das Rückenlehnenteil von dem Fahrzeugsitz zu entfernen, sodass der Rest des Fahrzeugsitzes, vorliegend der Grundrahmen, nicht demontiert werden muss.

Bei dem Rückenlehnenteil handelt es sich um eine Baugruppe, die unabhängig von dem Grundrahmen ist und mit diesem verbunden sein kann. Das Rückenlehnenteil kann also auch als ein Modul des Fahrzeugsitzes verstanden werden.

Gemäß einer weiterführendenden Ausführungsform kann es zusätzlich vorgesehen sein, dass das Sitzteil mit dem Grundrahmen, insbesondere dem Sitzteilrahmen, lösbar verbunden ist. Hierdurch ist es möglich, sowohl das Rückenlehnenteil als auch das Sitzteil separat vom Grundrahmen zu lösen, um es auszutauschen oder zu reinigen. Bevorzugt umfasst das Sitzteil ein Sitzpolster.

Gemäß einer weiteren bevorzugten Ausführungsform kann es vorgesehen sein, dass das Rückenlehnenteil einen Polsterrahmen mit einem Rückenlehnenpolster umfasst, wobei bevorzugt der Polsterrahmen dazu vorgesehen und ausgebildet ist, mit dem Rückenlehnenrahmen lösbar verbindbar zu sein.

Besonders bevorzugt ist das Rückenlehnenpolster mit dem Polsterrahmen verbunden, so dass ein relativ steifes Gebilde entsteht, welches dementsprechend leicht zu greifen und zu tragen ist.

Weiter bevorzugt ist durch die Verbindung zwischen zwei Rahmenelementen, nämlich dem Polsterrahmen und dem Rückenlehnenrahmen möglich, durch die steife Ausgestaltung der Rahmen, eine leichte Befestigung zwischen den Rahmen zu erhalten, da ein Verdrehen eines der Rahmen bei der Montage nicht auftreten kann. Besonders bevorzugt wird die Montage bzw. die Verbindung zwischen dem Polsterrahmen und dem Rückenlehnenrahmen weiter erleichtert, wenn der Polsterrahmen und der Rückenlehnenrahmen zumindest teilweise komplementär zueinander ausgebildet sind.

Gemäß einer weiterführenden Ausführungsform kann durch etwaige Ausgestaltung der Komfort des Fahrzeugsitzes weiter erhöht werden, wenn das Rückenlehnenteil eine Einstellmöglichkeit zum Verändern einer Rückenlehnenneigung und/oder einer Lendenstütze aufweist. Entsprechend bevorzugt kann es daher vorgesehen sein, dass das Rückenlehnenteil ein Stützteil umfasst, welches mit dem Polsterrahmen drehbar um eine erste Drehachse und mit dem Sitzteil lösbar verbunden ist, um weiterhin die leichte Lösbarkeit zwischen Rückenlehnenteil und Grundrahmen gewährleisten zu können.

Das Stützteil ist ein Bestandteil des Rückenlehnenteils und kann entsprechend mit dem Rückenlehnenteil vom Grundrahmen entfernt oder daran angeordnet werden.

Besonders bevorzugt kann es daher vorgesehen sein, wenn das Stützteil dazu vorgesehen und ausgebildet ist, einen mittleren Bereich des Rückenlehnenpolsters zu deformieren, wobei die Deformation mittels einer Verlagerung des Sitzteils hervorrufbar ist, wobei durch die Deformation des mittleren Bereichs ein Rückenlehnenneigungswinkel einstellbar ist.

Da das Stützteil einerseits mit dem Polsterrahmen bis auf Drehung ortsfest ist und andererseits mit dem Sitzteil verbunden ist, welches verlagerbar ist, bewegt sich das Stützteil entsprechend bei einer Verlagerung des Sitzteils. Um der Verlagerung des Sitzteils entsprechend vorteilhaft folgen zu können, kann es vorteilhaft vorgesehen sein, wenn das Stützteil zumindest teilweise deformierbar ausgebildet ist. Insbesondere ist das Stützteil dazu vorgesehen und ausgebildet, elastisch deformierbar zu sein.

Durch die Einstellung des Rückenlehnenneigungswinkels kann beispielsweise die Lendenstütze verändert werden, abhängig von den Wünschen der auf dem Fahrzeugsitz sitzenden Person.

Eine Deformation des Rückenlehnenpolsters entsteht dadurch, da das Stützteil einerseits drehbar mit dem Polsterrahmen und andererseits mit dem Sitzteil verbunden ist. Durch eine Verlagerung des Sitzteils, entweder nach vorne oder nach hinten, wird das Stützteil entsprechend der Bewegung des Sitzteils mitbewegt. Da das Stützteil, wie beschrieben, mit dem Polsterrahmen verbunden ist, ändert sich insgesamt der Winkel des Stützteils zu dem Sitzteil bzw. dem Rückenlehnenrahmen bzw. dem Polsterrahmen.

Besonders bevorzugt ist es vorgesehen, dass in einer nicht-verlagerten Stellung der Rückenlehnenneigungswinkel kleiner ist als in einer verlagerten Stellung.

Unter der nicht-verlagerten Stellung kann verstanden werden, dass sich das Sitzteil in seiner hintersten Stellung befindet. Hinsichtlich des Rückenlehnenneigungswinkels bedeutet dies, dass der Rückenlehnenneigungswinkel den kleinsten einnehmbaren Wert aufweist. Eine verlagerte Stellung ist demnach jede Stellung, welche von der nicht-verlagerten Stellung abweicht, also wenn beispielsweise das Sitzteil nach vorne verlagert wird bzw. ist.

Eine Verlagerung des Sitzteils zu dem Sitzteilrahmen ist bevorzugt entlang einer Verlagerungsrichtung vorgesehen. Besonders bevorzugt ist die Verlagerungsrichtung eine Längsrichtung des Fahrzeugsitzes. Gemäß einer bevorzugten Ausführungsform ist es vorgesehen, dass das Sitzteil gegenüber dem Sitzteilrahmen ausschließlich translatorisch verlagerbar ist.

Bevorzugt ist es vorgesehen, dass durch eine einwirkende Kraft das Sitzteil verlagert werden kann, wobei die einwirkende Kraft durch eine auf dem Sitzteil sitzende Person aufgebracht wird. Eine derartige einwirkende Kraft kann durch eine Gewichtsverlagerung der Person auf das Sitzteil einwirken bzw. kann in das Sitzteil eingebracht werden. Hierdurch ist eine besonders einfache und an die Person angepasste Verlagerung des Sitzteils hinsichtlich der Bedürfnisse der Person möglich.

Gemäß einer bevorzugten Ausführungsform ist eine Führungseinrichtung vorgesehen, mittels welcher das Sitzteil gegenüber dem Sitzteilrahmen geführt werden kann. Besonders bevorzugt ist die Führungseinrichtung derart ausgebildet, dass das Sitzteil in der Verlagerungsrichtung verlagerbar ist.

Gemäß einer bevorzugten Ausführungsform kann die Führungseinrichtung besonders einfach konstruiert sein, wenn die Führungseinrichtung Nutensteinelemente und Nuten umfasst, wobei die Nutensteine zumindest teilweise komplementär zu den Nuten ausgebildet sind, so dass die Nutensteine in den Nuten führbar sind.

Dabei kann es vorgesehen sein, dass die Nutensteinelemente mit dem Sitzteilrahmen verbunden, insbesondere fest verbunden, sind, und die Nuten in dem Sitzteil ausgebildet sind. Hierdurch kann die Montage des Sitzteils erleichtert werden. Alternativ wäre es auch denkbar, dass Nutensteinelemente mit dem Sitzteil verbunden, insbesondere fest verbunden, sind, und die Nuten in dem Sitzteilrahmen ausgebildet sind.

Besonders einfach und konstruktiv vorteilhaft kann die Führungseinrichtung ausgebildet sein, wenn eines der Nutensteinelemente bzw. jedes Nutensteinelement einen ersten Abschnitt, einen zweiten Abschnitt und einen dritten Abschnitt umfassen, wobei der erste Abschnitt oberhalb der Nute angeordnet ist und breiter als die Nute ausgebildet ist, und wobei der zweite Abschnitt sich an den ersten Abschnitt anschließt und sich durch die entsprechende Nut hindurch erstreckt und ein dritter Abschnitt unterhalb der Nut angeordnet ist und sich an den zweiten Abschnitt anschließt, wobei der dritte Abschnitt ebenso breiter als die Nut ausgebildet ist.

Das Nutensteinelement weist also bevorzugt eine Schichtstruktur auf, ausgebildet durch den ersten Abschnitt, den zweiten Abschnitt und den dritten Abschnitt, welche in einer Höhenrichtung übereinander angeordnet sind. Dadurch, dass bevorzugt der zweite Abschnitt in der Nut geführt werden kann und der erste Abschnitt und der dritte Abschnitt breiter als die Nut ausgebildet sind, kann ein Lösen des Nutensteins und der Nut verhindert werden.

Besonders bevorzugt weist die Nut bzw. weisen die Nuten einen Montageabschnitt auf, welcher dazu ausgebildet und vorgesehen ist, dass der erste Abschnitt durch diesen Montageabschnitt geführt werden kann, so dass der zweite Abschnitt dann durch die Nut hindurchragen kann. Bevorzugt ist der Montageabschnitt derart dimensioniert, dass der erste Abschnitt hindurchgeführt werden kann.

Die Nut wird durch den ersten Abschnitt und den dritten Abschnitt gehalten, so dass ein Herausfallen des Nutensteins aus der Nut gut verhindert werden kann.

Besonders bevorzugt ist die Position des Montageabschnitts bzw. die Verlagerung des Sitzteils derart, dass in einem zusammengebauten Zustand des Fahrzeugsitzes, das heißt, dass das Sitzteil am Sitzteilrahmen montiert ist, der Nutenstein nicht bis in den Montageabschnitt geführt werden kann, um ein Herausfallen des Nutensteins aus der Nut verhindern zu können.

Besonders vorteilhaft kann gemäß einer bevorzugten Ausführungsform das Herausfallen eines Nutensteins verhindert werden und die Verlagerung begrenzt werden, wenn an dem Sitzteil ein erster Endanschlag und an dem Sitzteilrahmen ein Bolzenelement angeordnet sind, welche dazu vorgesehen und ausgebildet sind, bei einer Bewegung des Sitzteils aus der verlagerten Stellung in die nicht-verlagerte Stellung miteinander wechselzuwirken, wobei ein Kontaktieren des Bolzenelements mit dem Endanschlag die nicht-verlagerte Stellung definiert.

Weiter bevorzugt ist es vorteilhaft, wenn der erste Endanschlag in der Verlagerungsrichtung vor dem Montageabschnitt angeordnet ist. Das heißt, dass bei einer Verlagerung in die Grundstellung es nicht möglich ist, das Sitzteil so weit zu verschieben, dass der Nutenstein in dem Montageabschnitt angeordnet ist.

Gemäß einer weiteren bevorzugten Ausführungsform kann es vorgesehen sein, dass der Rückenlehnenrahmen eine erste sich nach oben erstreckende Rückenlehnenrahmenstütze und eine zweite sich nach oben erstreckende Rückenlehnenrahmenstütze umfasst. Weiter bevorzugt kann es vorgesehen sein, dass der Polsterrahmen eine erste sich nach oben erstreckende Polsterrahmenstütze und eine zweite sich nach oben erstreckende Polsterrahmenstütze umfasst. Noch weiter bevorzugt kann es vorgesehen sein, dass die erste Rückenlehnenrahmenstütze und die erste Polsterrahmenstütze sowie die zweite Rückenlehnenrahmenstütze und die zweite Polsterrahmenstütze in einem unteren Bereich fest miteinander verbindbar sind, insbesondere aber lösbar miteinander verbindbar sind.

Nach oben kann in diesem Zusammenhang in einer vertikalen Richtung sein, beispielsweise entlang einer Fahrzeugsitzhöhenrichtung, welche bevorzugt senkrecht zu der Verlagerungsrichtung ist.

Dadurch, dass der Rückenlehnenrahmen und der Polsterrahmen jeweils Stützen aufweisen, kann eine besonders einfache Montage der Rahmen zueinander gewährleistet werden. Ebenso kann die Stabilität der Rahmen erhöht werden.

Eine feste, aber lösbare Verbindung kann dabei durch eine Schraubverbindung oder dergleichen realisiert sein.

Besonders bevorzugt kann es vorgesehen sein, dass die unteren Enden der Polsterrahmenstützen, also in der Fahrzeugsitzhöhenrichtung gesehen, mit den Rückenlehnenrahmenstützen verbunden werden können, insbesondere mit unteren Enden der Rückenlehnenrahmenstützen.

Darüber hinaus kann es zur weiteren Verbindung zwischen dem Polsterrahmen und dem Rückenlehnenrahmen vorgesehen sein, dass der Polsterrahmen in entsprechende Ausnehmungen des Rückenlehnenrahmens oder umkehrt einhängbar ist.

Gemäß einer bevorzugten Ausführungsform kann es zur platzsparenden Anordnung des Fahrzeugsitzes vorgesehen sein, dass der Sitzteilrahmen und der Rückenlehnenrahmen einen festen und unveränderbaren Winkel zueinander einschließen.

Dadurch kann es vorteilhaft möglich sein, dass der Winkel der Person zwischen dem oberen Bereich des Rückens und des Gesäßes unverändert bleibt, sodass eine weitere besonders vorteilhafte Anpassung im Lendenbereich des Rückens möglich ist.

Besonders bevorzugt ist es vorgesehen, dass der Rückenlehnenrahmen und der Sitzteilrahmen lösbar miteinander verbindbar bzw. verbunden sind, wodurch eine weitere erleichterte Montage und Demontage möglich sind.

Gemäß einer weiterführenden Ausführungsform kann es zum Erhöhen der Stabilität vorgesehen sein, dass der Polsterrahmen eine erste Querstrebe umfasst. Besonders bevorzugt ist die erste Querstrebe zwischen den Polsterrahmenstützen angeordnet und mit diesen verbunden.

Weiter bevorzugt kann es vorgesehen sein, dass an der ersten Querstrebe das Stützelement drehbar angeordnet ist. Die Querstrebe dient also zur Anordnung des Stützelements im Rückenlehnenteil. Besonders vorteilhaft ist das Stützelement mittig an der ersten Querstrebe befestigt, wodurch das Stützelement zur Deformation des mittleren Bereichs des Rückenlehnenpolsters bereits vorgesehen sein kann. Insbesondere ist das Stützelement von den Polsterrahmenstützen beabstandet angeordnet, so dass eine Kontaktierung zwischen Stützelement und Polsterrahmenstützen vermieden werden kann bei der Verlagerung des Sitzteils.

Gemäß einer bevorzugten Ausführungsform kann die lösbare Verbindung des Rückenlehnenteils zu dem Sitzteil derart ausgebildet sein, dass das Stützteil mittels einer Verbindungseinheit mit dem Sitzteil verbunden ist. Weiter bevorzugt umfasst die Verbindungseinheit ein Mitnehmerelement, welches ortsfest mit dem Sitzteil verbunden ist. Besonders bevorzugt ist das Mitnehmerelement mit dem Sitzteil verschweißt oder auf ähnliche Weise verbunden, wobei aber auch eine lösbare Verbindung denkbar wäre.

Weiter bevorzugt ist es vorgesehen, dass an dem Stützteil ein Eingriffelement angeordnet ist, welches dazu vorgesehen und ausgebildet ist, mit dem Mitnehmerelement verbunden zu werden. Insbesondere kann das Eingriffelement derart ausgebildet sein, dass das Mitnehmerelement in das Eingriffelement eingreifen kann und somit eine lösbare Verbindung mittels der Verbindungseinheit ausgebildet werden kann.

Gemäß einer weiteren bevorzugten Ausführungsform kann es vorgesehen sein, dass das Stützteil zumindest teilweise aus einem Draht, insbesondere einem länglichen Draht, gefertigt ist. Dadurch kann das Stützteil preisgünstig und materialsparend gefertigt werden.

Zur Erhöhung der Stabilität und einer elastischen Deformation des Stützteils kann es gemäß einer bevorzugten Ausführungsform vorgesehen sein, dass das Stützteil mehrere Mäander aufweist, so dass das Stützteil eine mäandrierende Struktur aufweist.

Um weiter die Fertigung des Stützteils zu erleichtern, kann es gemäß einer weiteren bevorzugten Ausführungsform vorgesehen sein, dass das Stützteil aus einem ersten Stützteilelement und einem zweiten Stützteilelement ausgebildet ist, wobei das erste Stützteilelement und das zweite Stützteilelement miteinander verbunden sind.

Besonders bevorzugt sind die Stützteilelemente identisch ausgebildet, so dass weiter der Produktionsaufwand reduziert werden kann.

Da das Stützteil aus zwei Stützteilelementen ausgebildet sein kann, welche miteinander verbunden sind, ist es vorteilhaft gemäß einer Ausführungsform vorgesehen, dass die Stützteilelemente mittels zumindest zweier Verbindungselemente miteinander verbunden sind. Bevorzugt handelt es sich bei den Verbindungselementen um aus Draht gefertigten Verbindungselementen.

Weiterführende Ausgestaltungen und Ausbildungen der Ausführungsformen untereinander sind auf die weiteren Ausführungen anwendbar und sind untereinander frei kombinierbar, sofern sie nicht gegenläufigen Ausführungsformen entsprechen. Merkmale hinsichtlich des Fahrzeugsitzes und des Verfahrens zur Montage des Fahrzeugsitzes sind in korrespondierender Weise verwendbar.

Weitere vorteilhafte Ausführungsformen ergeben sich aus den Unteransprüchen.

Die verschiedenen Ausführungsformen mit all ihren Merkmalen sind dabei beliebig kombinierbar und austauschbar.

Sämtliche in den Anmeldungsunterlagen offenbarten Merkmale werden als erfindungswesentlich beansprucht, sofern sie einzeln oder in Kombination gegenüber dem Stand der Technik neu sind.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer, in einzelnen oder in unterschiedlichen Figuren gezeigten Merkmalen ergeben können.

Weitere Ziele, Vorteile und Zweckmäßigkeiten der vorliegenden Erfindung sind der nachfolgenden Beschreibung in Verbindung mit den Zeichnungen zu entnehmen. Hierbei zeigt:
- Figur 1A: einen Fahrzeugsitz gemäß einer Ausführungsform in einer Seitenansicht;
- Figur 1B: den Fahrzeugsitz gemäß Figur 1A in einer Vorderansicht;
- Figur 2A-2C: die Funktionsweise des Fahrzeugsitzes gemäß Figur 1A;
- Figur 3: ein Rückenlehnenteil des Fahrzeugsitzes;
- Figur 4A-4B: den Fahrzeugsitz mit einem Grundrahmen, einem Sitzteil und dem Rückenlehnenteil;
- Figur 5A-5B: ein Stützelement des Rückenlehnenteils;
- Figur 6A-6B: eine Verbindung des Stützelements zu einem Sitzteil;
- Figur 7A-7D: den Fahrzeugsitz in verschiedenen Stellungen in verschiedenen Darstellungen;
- Figur 8A-8C: den Fahrzeugsitz in einer Schnittdarstellung in verschiedenen Stellungen.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

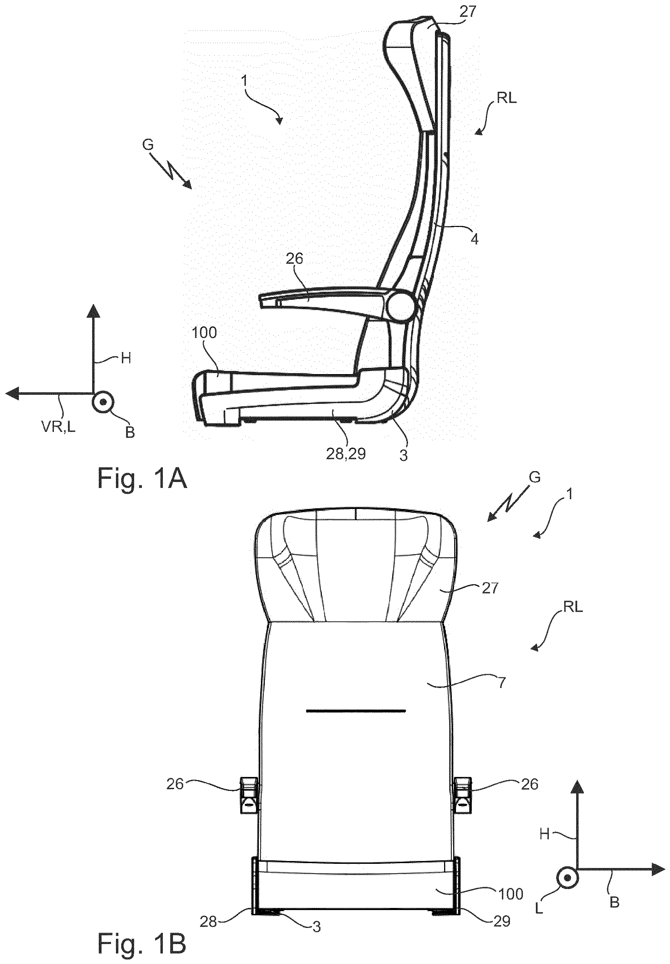

In den Figuren 1A und 1B ist ein erfindungsgemäßer Fahrzeugsitz 1 dargestellt, wobei der Fahrzeugsitz 1 in der Figur 1A in einer Seitendarstellung und in der Figur 1B in einer Frontansicht dargestellt ist, jeweils in einer nicht-verlagerten Stellung G.

Weiter weist der Fahrzeugsitz 1 eine Rückenlehne RL mit einem Rückenlehnenrahmen 4 und einem Rückenlehnenteil 5 mit einem Rückenlehnenpolster 7 auf. Weiter bevorzugt kann der Fahrzeugsitz 1 mindestens eine an der Rückenlehne RL drehbar verbundene Armlehne 26 und eine Kopfstützte 27 aufweisen. Weiter ist ein Sitzteilrahmen 3 dargestellt. Ebenso ist ein Sitzteil 100 dargestellt. Das Sitzteil 100 kann gegenüber dem Sitzteilrahmen 3 verlagert werden, beispielsweise entlang einer Verlagerungsrichtung VR, welche einer Fahrzeugsitzlängsrichtung L entsprechen kann.

Weiter sind noch eine Fahrzeugsitzhöhenrichtung H und eine Fahrzeugsitzbreitenrichtung B dargestellt.

Vorteilhaft kann eine Führungseinrichtung vorgesehen sein, mittels welcher das Sitzteil 3 gegenüber dem Sitzteilrahmen 3 geführt werden kann. Besonders bevorzugt ist die Führungseinrichtung derart ausgebildet, dass das Sitzteil 100 in der Verlagerungsrichtung VR verlagerbar ist.

Weiter bevorzugt sind ein erstes Abdeckelement 28 und ein zweites Abdeckelement 29 dargestellt, welche mit dem Sitzteilrahmen 3 verbunden sind, bevorzugt lösbar verbunden sind, und welche den Sitzteilrahmen 3 nach außen abdecken, so dass ein Eingreifen von Fingern in die Führungseinrichtung und während der Verlagerung nicht möglich ist.

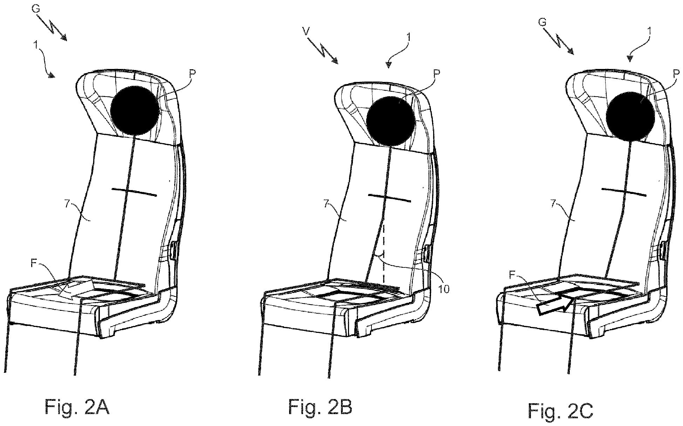

In den Figuren 2A bis 2C ist das Funktionsprinzip anhand von schematischen Zeichnungen dargestellt.

Auf dem Fahrzeugsitz 1 sitzt eine Person P, genauer gesagt sitzt die Person P auf dem Sitzteil 100. Durch die Person P kann eine Kraft F, welche auf das Sitzteil 100 einwirkt, aus der aktuell vorliegenden nicht-verlagerten Stellung G des Fahrzeugsitzes 1 in eine verlagerte Stellung V zu bringen, welche in der Figur 2B dargestellt ist. Das Sitzteil 100 ist im Vergleich zu der Figur 2A verlagert.

Der Fahrzeugsitz 1 kann dazu derart ausgebildet und vorgesehen sein, dass das Sitzteil 100 in der verlagerten Stellung V durch eine Gewichtskraft der auf dem Sitzteil 100 sitzenden Person P gehalten werden kann.

Ebenso kann durch die Person P das Sitzteil 100 wieder in die nicht-verlagerte Stellung G zurückgeführt werden, durch entsprechende Kraft F. Dies ist in der Figur 2C dargestellt.

Wie besonders in der Figur 2B zu erkennen ist, hat sich durch das Verlagern des Sitzteils 100 nach vorne das Rückenlehnenpolster 7 hinsichtlich eines Rückenlehnenneigungswinkels 10 verändert, was durch die Veränderung der Sitzposition der Person P erkennbar ist. Die Sitzposition der Person P in der Grundstellung G ist schematisch durch eine gestrichelte Linie in der Figur 2B dargestellt.

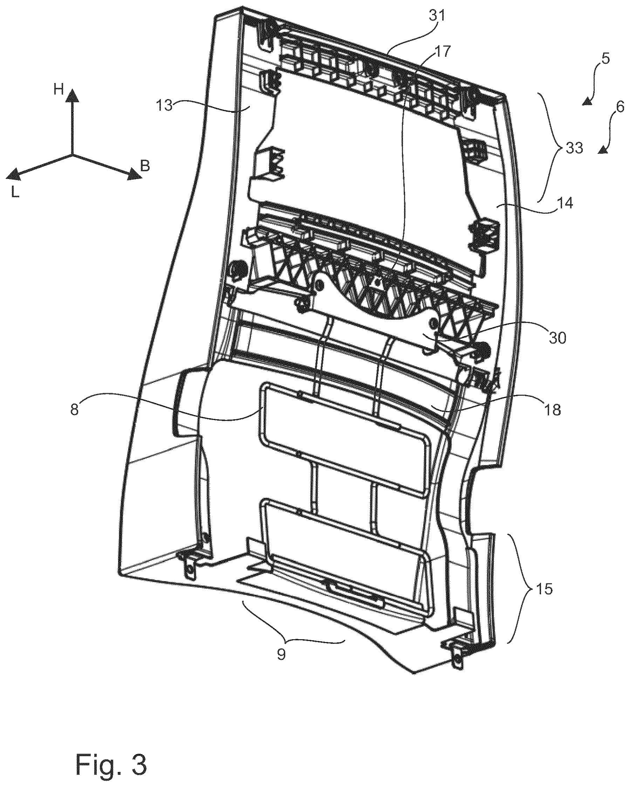

In der Figur 3 ist das erfindungsgemäße Rückenlehnenteil 5 gemäß einer bevorzugten Ausführungsform dargestellt, wobei zur besseren Übersichtlichkeit das Rückenlehnenpolster 7 nicht dargestellt ist.

Wie zu erkennen ist, umfasst der Polsterrahmen 6 eine erste Polsterrahmenstütze 13 und eine zweite Polsterrahmenstütze 14, welche sich in Fahrzeugsitzhöhenrichtung H erstrecken.

Die Polsterrahmenstützen 13, 14 sind vorliegend durch eine erste Querstrebe 17 miteinander verbunden, wobei die erste Querstrebe 17 sich in Fahrzeugsitzbreitenrichtung B erstreckt. An der ersten Querstrebe 17 ist ein Stützteil 8 drehbar um eine erste Drehachse 32 angeordnet. Dabei ist weiter bevorzugt ein Aufnahmeteil 30 vorgesehen, welches dazu vorgesehen und ausgebildet ist, das Stützteil 8 drehbar mit der ersten Querstrebe 17 zu verbinden.

Ebenso ist eine zweite Querstrebe 18 erkennbar, welche ebenso die Polsterrahmenstützen 13, 14 verbindet und sich in Fahrzeugsitzbreitenrichtung B erstreckt. Bevorzugt ist die zweite Querstrebe 18 hinsichtlich der Fahrzeugsitzlängsrichtung L vor der ersten Querstrebe 17 angeordnet. Ebenso ist das Stützteil 8 derart ausgebildet, dass das Stützteil 8 vor der ersten Querstrebe 17 und vor der zweiten Querstrebe 18 angeordnet ist, wodurch das Stützteil 8 nicht aus dem Rückenlehnenteil 5 herausfallen kann und sich in der Verlagerungsrichtung VR nach und hinten einfach bewegen kann.

Die erste Querstrebe 17 und die zweite Querstrebe 18 sind etwa mittig des Polsterrahmens 6 angeordnet.

Darüber hinaus ist eine dritte Querstrebe 31 vorgesehen, welche die Polsterrahmenstützen 13, 14 in einem oberen Bereich 33 miteinander verbindet und sich in Fahrzeugsitzbreitenrichtung B erstreckt.

Ein unteren Bereich 15 des Polsterrahmens 6 ist dabei frei von Querstreben 17, 18, 31, die ansonsten die Bewegung des Stützteils 8 bei einer Verlagerung des Sitzteils 100 behindern könnten.

Der untere Bereich 15 und der obere Bereich 33 beziehen sich auf die Fahrzeugsitzhöhenrichtung H.

Das Stützteil 8 ist in einem mittleren Bereich 9 des Polsterrahmens 6 angeordnet, wobei sich der mittlere Bereich 9 auf die Fahrzeugsitzbreitenrichtung B bezieht. Genauer ist der mittlere Bereich 9 zwischen den Polsterrahmenstützen 13, 14 angeordnet.

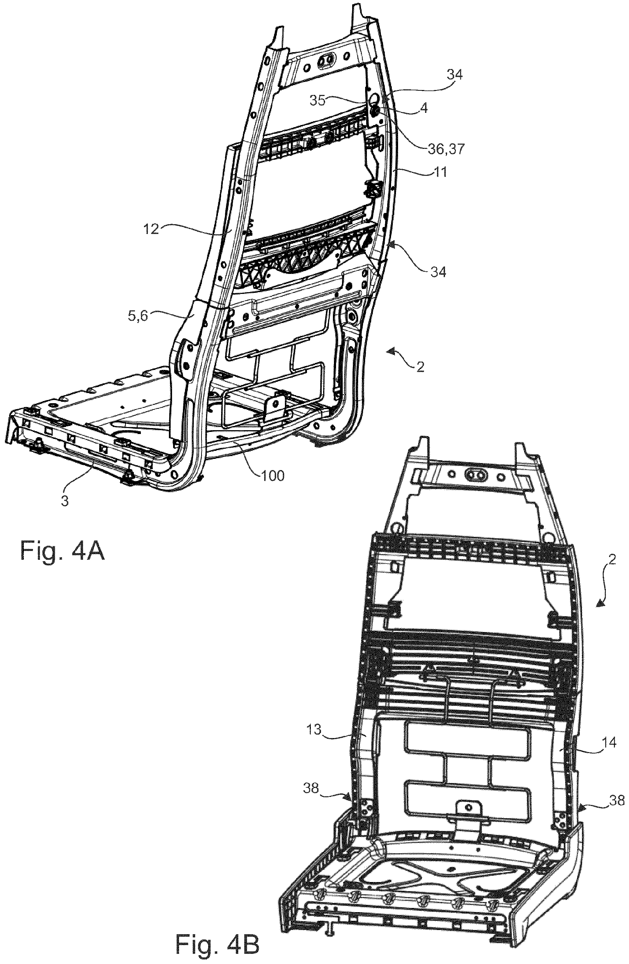

In den Figuren 4A und 4B ist dargestellt, wie der Polsterrahmen 6 hinsichtlich des Grundrahmens 2 angeordnet ist. In der Figur 4A ist eine perspektivische Ansicht des Fahrzeugsitzes 1 von hinten und in der Figur 4B eine perspektivische Ansicht des Fahrzeugsitzes 1 von vorne dargestellt, jeweils ohne Polsterelemente.

Wie dargestellt, kann der Polsterrahmen 6 mittels Einhängeverbindungen 34 mit dem Rückenlehnenrahmen 4 verbunden werden, wobei bevorzugt eine Polsterrahmenstütze 13, 14 mit einer Rückenlehnenstütze 11, 12 verbunden werden kann. Eine Einhängeverbindung 34 kann dabei derart ausgebildet sein, dass sie nach einem "Schlüssellochprinzip" funktioniert, das heißt, dass eine größere Öffnung 35 und eine kleinere Öffnung 36 vorgesehen sind, wobei die größere Öffnung 35 größer ist als die kleinere Öffnung 36. In die größere Öffnung 35 kann ein Haltemittel 37 des Polsterrahmens 6 eingebracht werden und nach unten in die kleinere Öffnung 36 eingehängt werden. Dazu ist das Haltemittel 37 zumindest teilweise größer als die kleinere Öffnung 36 ausgebildet.

Es kann vorgesehen sein, dass die erste Rückenlehnenrahmenstütze 11 und die erste Polsterrahmenstütze 13 sowie die zweite Rückenlehnenrahmenstütze 12 und die zweite Polsterrahmenstütze 14 in dem unteren Bereich 15 fest miteinander verbindbar sind, insbesondere aber lösbar miteinander verbindbar sind. Dies kann durch eine entsprechende Verbindung 38 erreicht werden, welche vorliegend als eine Schraubverbindung ausgestaltet ist.

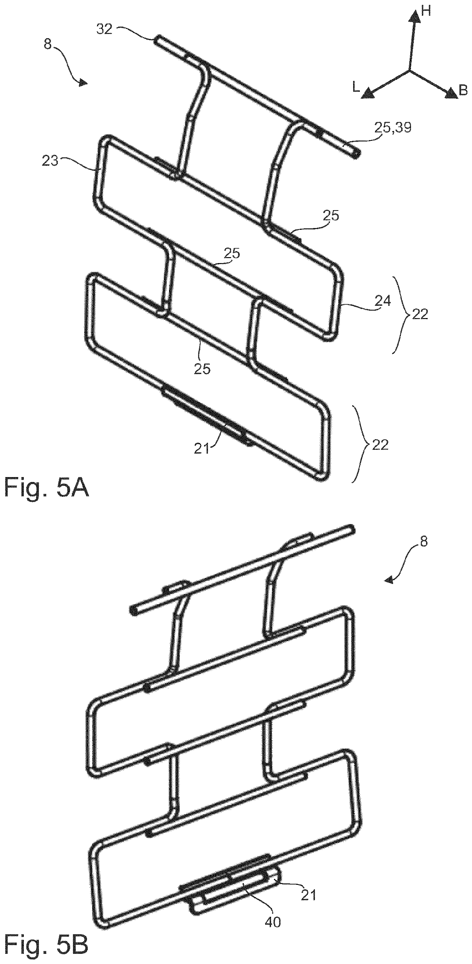

In den Figuren 5A und 5B ist das Stützteil 8 gemäß einer Ausführungsform dargestellt, wobei das Stützteil 8 in der Figur 5A von vorne und in der Figur 5B von hinten dargestellt ist.

Das Stützteil 8 umfasst ein erstes Stützteilelement 23 und ein zweites Stützteilelement 24, welche miteinander verbunden sind mittels Verbindungselemente 25. Eines der Verbindungselemente 25, nämlich das oberste Verbindungselement 25, 39, ist länger als die weiteren Verbindungselemente 25 ausgebildet, so dass dieses gut mit dem Aufnahmeteil 30 verbunden werden kann, so dass das oberste Verbindungselement 25, 39 die erste Drehachse 32 ausbildet.

Das Stützteil 8 ist dabei derart, dass es mehrere Mäander 22 aufweist.

Das Stützteil 8 weist weiter an seinem unteren Ende ein Eingriffelement 21 auf, welches ein Teil der Verbindungseinheit 19 ist und derart ausgebildet ist, ein Mitnehmerelement 20 aufzunehmen, so dass das Stützteil 8 mit dem Sitzteil 100 verbunden werden kann bzw. ist.

Das Eingriffelement 21 weist dazu eine Öffnung 40 auf, in welche sich das Mitnehmerelement 20 hinein- und hinausragen kann.

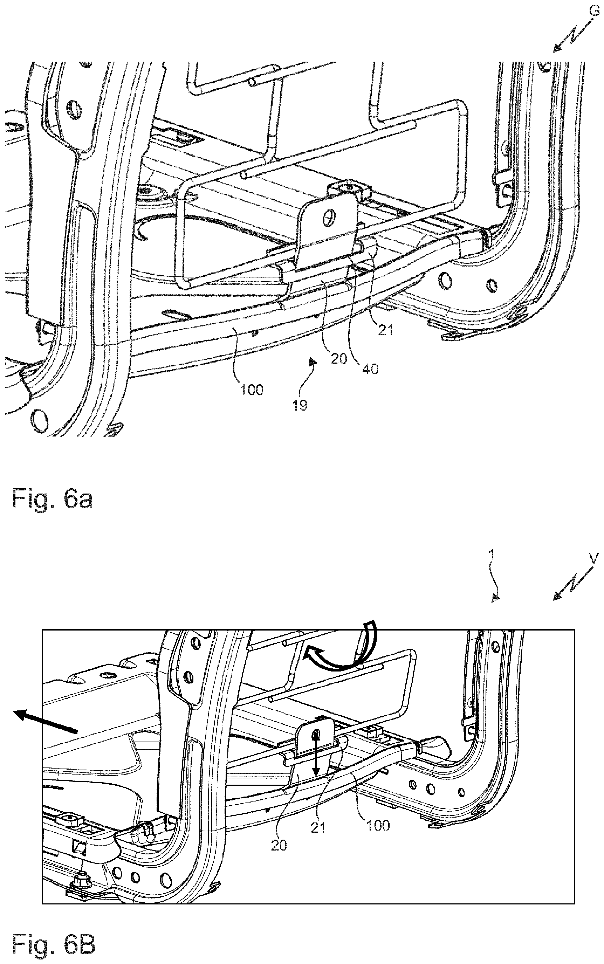

Die Verbindungseinheit 19 umfassend das Eingriffelement 21 und das Mitnehmerelement 20 sind in den Figuren 6A und 6B genauer dargestellt. Die Figur 6A zeigt dabei den Fahrzeugsitz 1 in der nicht-verlagerten Stellung G, die Figur 6B den Fahrzeugsitz 1 in der verlagerten Stellung V bzw. wie der Fahrzeugsitz 1 in die verlagerte Stellung V gebracht wird.

Wie zu erkennen ist, ist das Mitnehmerelement 20 in die Öffnung 40 des Eingriffelements 21 eingebracht und ragt von der einen Seite der Öffnung 40 durch die Öffnung 40 hindurch und erstreckt sich auf der weiteren Seite der Öffnung 40 weiter.

Durch die Verlagerung des Sitzteils 100 nach vorne, wie in der Figur 6B dargestellt, bewegt sich das Mitnehmerelement 20 entsprechend der Verlagerung des Sitzteils 100 mit dem Sitzteil 100, da diese miteinander verbunden sind. Durch diese Bewegung bzw. Verlagerung des Mitnehmerelement 20 bewegt sich das Eingriffelement 21 entsprechend. Da das Eingriffelement 21 mit dem Stützteil 8 verbunden, insbesondere fest verbunden, ist erfährt das Eingriffelement 21 eine entsprechende Bewegung. Da jedoch das Stützteil 8 bis auf Drehung ortsfest mit dem Polsterrahmen 6 verbunden ist, bewegt sich das Stützteil 8 durch das Eingriffelement 21 im unteren Bereich des Stützteils 8 nach vorne und dadurch auch in Fahrzeugsitzhöhenrichtung H nach oben. Das Eingriffelement 21 bewegt sich also relativ zu dem Mitnehmerelement 20 und wird durch dieses geführt.

Als Konsequenz dieser Bewegung wird das Stützteil 8 entsprechend mitbewegt, wodurch der mittlere Bereich 9 des Rückenlehnenpolsters 7 entsprechend durch die Deformation des Stützteils 8 entsprechend ebenso deformiert wird. Die Bewegung des Stützteils 8 sowie des Sitzteils 100 und des Mitnehmerelements 20 in Verbindung mit dem Eingriffelement 21 ist in der Figur 6B durch entsprechende Pfeile dargestellt. Besonders bevorzugt ist das Stützteil 8 deformierbar ausgebildet, insbesondere elastisch deformierbar ausgebildet.

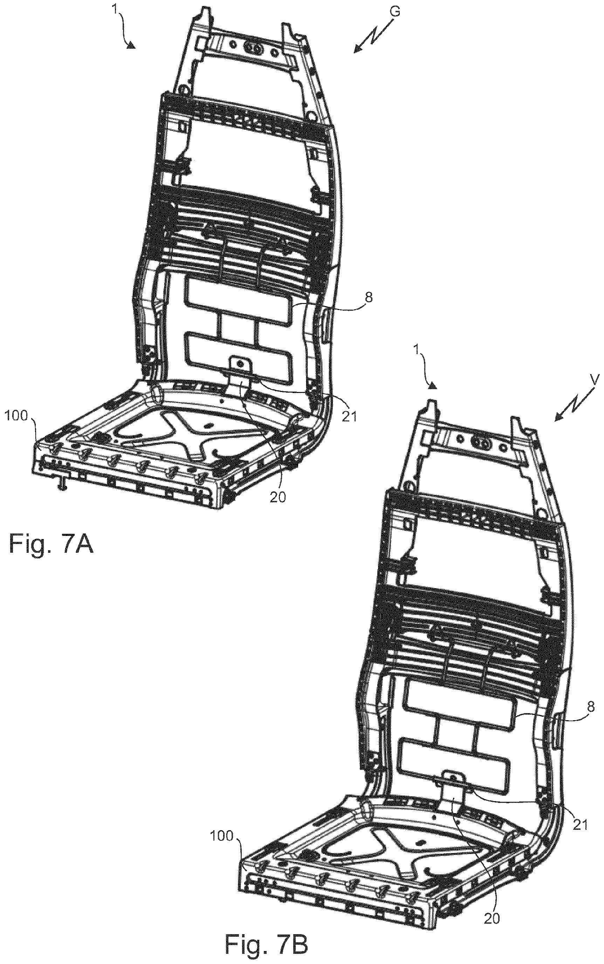

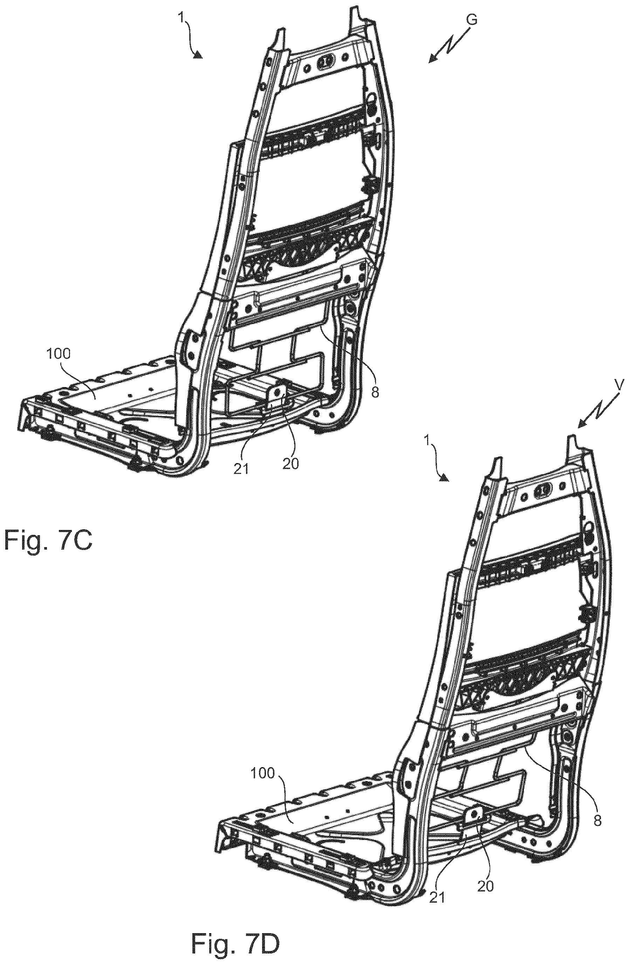

In den Figuren 7A bis 7D ist die Bewegung des Sitzteils 100 und die entsprechenden Bewegungen der Verbindungseinheit 19 mit Eingriffelement 21 und Mitnehmerelement 20 nochmals in Gänze dargestellt, wobei in der Figur 7A der Fahrzeugsitz 1 in perspektivischer Ansicht von vorne in der nicht-verlagerten Stellung G und in der Figur 7B in der verlagerten Stellung V dargestellt ist, und wobei in der Figur 7C der Fahrzeugsitz 1 in perspektivischer Ansicht von hinten in der nicht-verlagerten Stellung G und in der Figur 7D in der verlagerten Stellung V dargestellt ist.

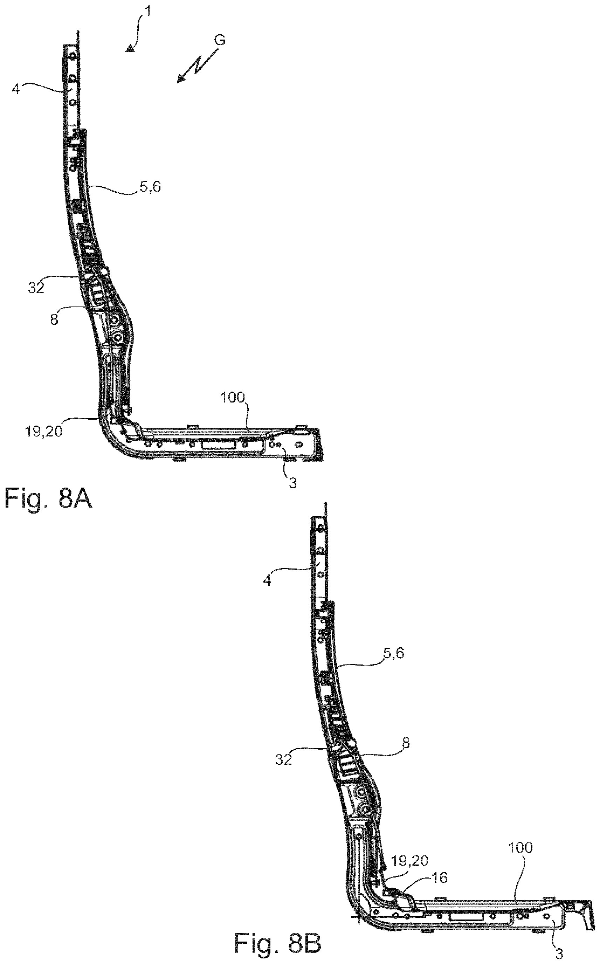

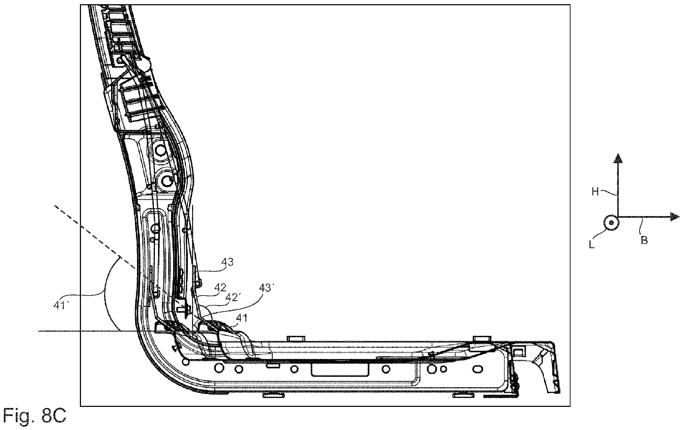

In der Figur 8A ist der Fahrzeugsitz 1 in einer seitlichen Schnittansicht in der nicht-verlagerten Stellung G und in der Figur 8B in der verlagerten Stellung V dargestellt ist, und wobei in der Figur 8C der Fahrzeugsitz 1 eine Überlagerung der nicht-verlagerten Stellung G und der verlagerten Stellung V dargestellt ist.

In der Figur 8C ist die Bewegung des Stützteils 8 ausgehend von der Verlagerung des Sitzteils 100 besonders gut erkennbar.

Weiter bevorzugt ist eine bevorzugte Ausgestaltung des Mitnehmerelements 20 erkennbar, dass das Mitnehmerelement 20 zumindest einen ersten Abschnitt 41, einen zweiten Abschnitt 42 und einen dritten Abschnitt 43 umfasst. Bevorzugt ist der erste Abschnitt 41 mit dem Sitzteil 100 verbunden, der zweite Abschnitt 42 mit dem ersten Abschnitt 41 und der dritte Abschnitt 43 mit dem zweiten Abschnitt 42. Bevorzugt ist der dritte Abschnitt 43 oberhalb des zweiten Abschnitts 42 angeordnet, und der zweite Abschnitt 42 oberhalb des ersten Abschnitts 41. Der erste Abschnitt 41 ist bevorzugt in einem ersten Winkel 41' zu der Fahrzeugsitzlängsrichtung L, der zweite Abschnitt 42 in einem zweiten Winkel 42` zu der Fahrzeugsitzlängsrichtung L und der dritte Abschnitte 43 in einem dritten Winkel 43` zu der Fahrzeugsitzlängsrichtung L angeordnet. Bevorzugt ist der erste Winkel 41' kleiner als der zweite Winkel 42` und der zweite Winkel 42` kleiner als der dritte Winkel 43'. Bevorzugt beträgt der dritte Winkel 43` 90°.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Grundrahmen
- 3: Sitzteilrahmen
- 4: Rückenlehnenrahmen
- 5: Rückenlehnenteil
- 6: Polsterrahmen
- 7: Rückenlehnenpolster
- 8: Stützteil
- 9: mittlerer Bereich
- 10: Rückenlehnenneigungswinkel
- 11: erste Rückenlehnenrahmenstütze
- 12: zweite Rückenlehnenrahmenstütze
- 13: erste Polsterrahmenstütze
- 14: zweite Polsterrahmenstütze
- 15: unterer Bereich
- 16: unveränderbarer Winkel
- 17: erste Querstrebe
- 18: zweite Querstrebe
- 19: Verbindungseinheit
- 20: Mitnehmerelement
- 21: Eingriffelement
- 22: Mäander
- 23: erstes Stützteilelement
- 24: zweites Stützteilelement
- 25: Verbindungselement
- 26: Armlehne
- 27: Kopfstütze
- 28: erstes Abdeckelement
- 29: zweites Abdeckelement
- 30: Aufnahmeteil
- 31: dritte Querstrebe
- 32: erste Drehachse
- 33: oberer Bereich
- 34: Einhängeverbindung
- 35: größere Öffnung
- 36: kleinere Öffnung
- 37: Haltemittel
- 38: Verbindung
- 39: oberstes Verbindungselement
- 40: Öffnung
- 41: erster Abschnitt
- 41': erster Winkel
- 42: zweiter Abschnitt
- 42`: zweiter Winkel
- 43: dritter Abschnitt
- 43`: dritter Winkel
- 100: Sitzteil
- L: Fahrzeugsitzlängsrichtung
- B: Fahrzeugsitzbreitenrichtung
- H: Fahrzeugsitzhöhenrichtung
- G: Grundstellung
- V: verlagerte Stellung
- P: Person
- VR: Verlagerungsrichtung
- RL: Rückenlehne
- F: Kraft

## Patentansprüche

1. Fahrzeugsitz umfassend einen Grundrahmen, welcher einen Sitzteilrahmen und einen Rückenlehnenrahmen umfasst, und ein gegenüber dem Grundrahmen verlagerbares Sitzteil,
**dadurch gekennzeichnet, dass**
der Fahrzeugsitz ein Rückenlehnenteil umfasst, wobei das Rückenlehnenteil dazu vorgesehen und ausgebildet ist, mit dem Rückenlehnenrahmen und dem Sitzteil lösbar verbindbar zu sein.

2. Fahrzeugsitz nach Anspruch 1,
**dadurch gekennzeichnet, dass**
das Rückenlehnenteil einen Polsterrahmen mit einem Rückenlehnenpolster umfasst, wobei der Polsterrahmen dazu vorgesehen und ausgebildet ist, mit dem Rückenlehnenrahmen lösbar verbindbar zu sein.

3. Fahrzeugsitz nach Anspruch 2,
**dadurch gekennzeichnet, dass**
das Rückenlehnenteil ein Stützteil umfasst, welches mit dem Polsterrahmen drehbar um eine erste Drehachse und mit dem Sitzteil lösbar verbunden ist.

4. Fahrzeugsitz nach Anspruch 3,
**dadurch gekennzeichnet, dass**
das Stützteil dazu vorgesehen und ausgebildet ist, einen mittleren Bereich des Rückenlehnenpolsters zu deformieren, wobei die Deformation mittels einer Verlagerung des Sitzteils hervorrufbar ist, wobei durch die Deformation des mittleren Bereichs ein Rückenlehnenneigungswinkel einstellbar ist.

5. Fahrzeugsitz nach Anspruch 4,
**dadurch gekennzeichnet, dass**
in einer nicht-verlagerten Stellung der Rückenlehnenneigungswinkel kleiner ist als in einer verlagerten Stellung.

6. Fahrzeugsitz nach Anspruch 2,
**dadurch gekennzeichnet, dass**
der Rückenlehnenrahmen eine erste sich nach oben erstreckende Rückenlehnenrahmenstütze und eine zweite sich nach oben erstreckende Rückenlehnenrahmenstütze umfasst, und wobei der Polsterrahmen eine erste sich nach oben erstreckende Polsterrahmenstütze und eine zweite sich nach oben erstreckende Polsterrahmenstütze umfasst, wobei die erste Rückenlehnenrahmenstütze und die erste Polsterrahmenstütze sowie die zweite Rückenlehnenrahmenstütze und die zweite Polsterrahmenstütze in einem unteren Bereich fest miteinander verbunden sind.

7. Fahrzeugsitz nach einem der Ansprüche 1 bis 6,
**dadurch gekennzeichnet, dass**
der Sitzteilrahmen und der Rückenlehnenrahmen einen festen und unveränderbaren Winkel zueinander einschließen.

8. Fahrzeugsitz nach einem der Ansprüche 1 bis 7,
**dadurch gekennzeichnet, dass**
der Polsterrahmen eine erste Querstrebe umfasst, an welcher das Stützelement drehbar angeordnet ist.

9. Fahrzeugsitz nach Anspruch 3,
**dadurch gekennzeichnet, dass**
das Stützteil mittels einer Verbindungseinheit mit dem Sitzteil verbunden ist, wobei die Verbindungseinheit ein Mitnehmerelement umfasst, welches ortsfest mit dem Sitzteil verbunden ist.

10. Fahrzeugsitz nach Anspruch 9,
**dadurch gekennzeichnet, dass**
an dem Stützteil ein Eingriffelement angeordnet ist, welches dazu vorgesehen und ausgebildet ist, mit dem Mitnehmerelement verbunden zu werden.

11. Fahrzeugsitz nach Anspruch 3,
**dadurch gekennzeichnet, dass**
das Stützteil zumindest teilweise aus einem länglichen Draht gefertigt ist.

12. Fahrzeugsitz nach Anspruch 3,
**dadurch gekennzeichnet, dass**
das Stützteil mehrere Mäander aufweist, so dass das Stützteil eine mäandrierende Struktur aufweist.

13. Fahrzeugsitz nach Anspruch 3,
**dadurch gekennzeichnet, dass**
das Stützteil aus einem ersten Stützteilelement und einem zweiten Stützteilelement ausgebildet ist, wobei das erste Stützteilelement und das zweite Stützteilelement miteinander verbunden sind.

14. Fahrzeugsitz nach Anspruch 13,
**dadurch gekennzeichnet, dass**
die Stützteilelemente mittels zumindest zweier Verbindungselemente miteinander verbunden sind.

15. Fahrzeugsitz nach einem der Ansprüche 1 bis 14,
**dadurch gekennzeichnet, dass**
das Sitzteil gegenüber dem Sitzteilrahmen ausschließlich translatorisch verlagerbar ist.
